# EUROPEAN PATENT APPLICATION

(11) **EP 4 810 201 A1**
(43) Date of publication of application: **23.09.2026**
(21) Application number: 26165966.8
(22) Date of filing: 19.03.2026
(51) Int. Cl.: B25F 1/00, B25F 5/00

(54) **POWER TOOL WITH SELECTIVE COMMUNICATION VIA BATTERY TERMINALS**

(30) Priority: 21.03.2025 US 202519086913
(71) Applicant: Black & Decker, Inc., New Britain, CT 06053 (US)
(72) Inventor: BESACK, Gregory Michael, New Britain, 06053 (US); ROVNAN, Alexander Joseph, New Britain, 06053 (US)
(74) Representative: SBD IPAdmin

(57) **Abstract**

An electric power tool may include a tool housing, an electronic control module disposed in the tool housing, and a battery receptacle formed on the tool housing and including a plurality of battery terminals at least partially electrically coupled to the electronic control module. The electronic control module may be configured to selectively configure the plurality of battery terminals between a first state in which one or more of the plurality of battery terminals is configured to receive power from a battery pack externally mounted to the battery receptacle and electrically coupled to the plurality of battery terminals, and a second state in which at least a portion of the plurality of battery terminals is configured to receive communication signals from a communication adapter externally mounted to the battery receptacle and electrically coupled to the plurality of battery terminals.

## Description

This disclosure relates generally to a power tool and, in some non-limiting embodiments or aspects, to a power tool with selective communication via battery terminals.

Many power tools and power equipment use a common protocol called a controller area network (CAN) bus for communication between various modules. For example, in an electric ride-on mower that includes multiple motor controllers and multiple battery management controllers, the CAN bus provides a communication means between these modules.

A wired communication link between these modules and the outside world may be needed to, for example, program these modules at the end of the assembly line, provide software updates or obtain performance or usage metrics. In particular, at service centers, a programming update may be required to ensure that the modules are configured with the latest version of software. However, this may require that the service center disassemble the tool or equipment to access the modules.

### SUMMARY

According to some non-limiting embodiments or aspects, provided is an electric power tool including: a tool housing; an electronic control module disposed in the tool housing; a battery receptacle formed on the tool housing and including a plurality of battery terminals at least partially electrically coupled to the electronic control module, wherein the electronic control module is configured to selectively configure the plurality of battery terminals between a first state in which one or more of the plurality of battery terminals is configured to receive power from a battery pack externally mounted to the battery receptacle and electrically coupled to the plurality of battery terminals, and a second state in which at least a portion of the plurality of battery terminals is configured to receive communication signals from a communication adapter externally mounted to the battery receptacle and electrically coupled to the plurality of battery terminals.

In some non-limiting embodiments or aspects, when the plurality of battery terminals is configured in the first state, the electronic control module is configured to: monitor the at least a portion of the plurality of battery terminals to identify a predetermined combination of signals at the plurality of battery terminals; and in response to identifying the predetermined combination of signals, configure the at least a portion of the plurality of battery terminals to be in the second state.

In some non-limiting embodiments or aspects, the electric power tool further includes: at least one additional electronic control module; and a bus that connects the electronic control module to the at least one additional electronic control module, wherein, when the plurality of battery terminals is in the second state, the communication signals received from the communication adapter are provided on the bus.

In some non-limiting embodiments or aspects, when the plurality of battery terminals is in the second state, the electronic control module is configured to: receive the communication signals via the plurality of battery terminals; and broadcast the communication signals internally on the bus.

In some non-limiting embodiments or aspects, the electric power tool further includes: switch circuitry configured to electrically couple the at least a portion of the plurality of battery terminals to the bus in response to receiving an enable signal, wherein the electronic control module is configured to generate the enable signal in response to identifying the predetermined combination of signals at the at least a portion of the plurality of battery terminals.

In some non-limiting embodiments or aspects, each additional electronic control module of the at least one additional electronic control module is associated with a unique identifier and configured to monitor the communication signals on the bus for the unique identifier to establish a communication connection with the communication adapter via the bus.

In some non-limiting embodiments or aspects, in response to establishing the communication connection with the communication adapter, each additional electronic control module of the at least one additional electronic control module is configured to perform at least one of following operations: receive and install a software update via the bus, provide data to the communication adapter via the bus, or any combination thereof.

In some non-limiting embodiments or aspects, the bus that connects the electronic control module to the at least one additional electronic control module utilizes a controller area network (CAN) protocol.

In some non-limiting embodiments or aspects, the plurality of battery terminals does not include a dedicated communications terminal.

In some non-limiting embodiments or aspects, the battery pack is configured to output voltage at a first voltage level to the plurality of battery terminals, wherein the adapter is configured to output voltage at a second voltage level that is less than the first voltage level to the plurality of battery terminals, and wherein the first voltage level is not compatible with the bus.

According to some non-limiting embodiments or aspects, provided is a system including: an electric power tool including: a tool housing; an electric motor disposed within the tool housing; an electronic control module disposed in the tool housing; and a battery receptacle formed on the tool housing and including a plurality of battery terminals at least partially electrically coupled to the electronic control module, wherein, when a removeable battery pack is coupled to the battery receptacle, one or more of the plurality of battery terminals is configured to receive power from the battery pack, wherein the power is selectively supplied to the electric motor, and when a communication adapter is externally mounted to the battery receptacle, at least a portion of the plurality of battery terminals is configured to receive communication signals from the communication adapter electrically coupled to the plurality of battery terminals, wherein the communication signals are transmitted to the electronic control module or another electronic component of the electric power tool.

In some non-limiting embodiments or aspects, the system further includes: the communication adapter, wherein the communication adapter includes a plurality of electrical contacts configured to be electrically coupled to the plurality of battery terminals of the electric power tool, and wherein the communication adapter is configured to transmit the communication signals via at least a portion of the plurality of electrical contacts electrically coupled to the at least a portion of the plurality of battery terminals.

In some non-limiting embodiments or aspects, the system further includes: a computing device configured to be electrically coupled to the communication adapter and configured to control the communication adapter to: provide a predetermined combination of signals at the plurality of battery terminals via the plurality of electrical contacts; and transmit the communication signals via the at least a portion of the plurality of electrical contacts electrically coupled to the at least a portion of the plurality of battery terminals.

In some non-limiting embodiments or aspects, the electronic control module is configured to monitor the plurality of battery terminals to identify the predetermined combination of signals at the plurality of battery terminals; and in response to identifying the predetermined combination of signals at the plurality of battery terminals, configure the at least a portion of the plurality of battery terminals to be in a communication state in which the at least a portion of the plurality of battery terminals is configured to receive the communication signals from the communication adapter electrically coupled to the plurality of battery terminals.

In some non-limiting embodiments or aspects, the electric power tool further includes: at least one additional electronic control module; and a bus that connects the electronic control module to the at least one additional electronic control module, wherein, when the plurality of battery terminals is in the communication state, the communication signals received from the communication adapter are provided on the bus.

In some non-limiting embodiments or aspects, when the plurality of battery terminals is in the communication state, the electronic control module is configured to: receive the communication signals; and broadcast the communication signals internally on the bus.

In some non-limiting embodiments or aspects, the electric power tool further includes switch circuitry configured to electrically couple the at least a portion of the plurality of battery terminals to the bus in response to receiving an enable signal, and wherein the electronic control module is configured to generate the enable signal in response to identifying the predetermined combination of signals at the plurality of battery terminals.

In some non-limiting embodiments or aspects, each additional electronic control module of the at least one additional electronic control module is associated with a unique identifier and configured to monitor the communication signals on the bus for the unique identifier to establish a communication connection with the communication adapter via the bus.

In some non-limiting embodiments or aspects, in response to establishing the communication connection with the communication adapter, each additional electronic control module of the at least one additional electronic control module is configured to perform at least one of following operations: receive and install a software update from the communication adapter via the bus, provide data to the communication adapter via the bus, or any combination thereof.

In some non-limiting embodiments or aspects, the bus that connects the electronic control module to the at least one additional electronic control module utilizes a CAN protocol.

In some non-limiting embodiments or aspects, the plurality of battery terminals does not include a dedicated communications terminal.

In some non-limiting embodiments or aspects, the battery pack is configured to output voltage at a first voltage level to the plurality of battery terminals, and wherein the adapter is configured to output voltage at a second voltage level that is less than the first voltage level to the plurality of battery terminals, and wherein the first voltage level is not compatible with the bus.

Further non-limiting embodiments or aspects are set forth in the following numbered clauses:
Clause 1: An electric power tool comprising: a tool housing; an electronic control module disposed in the tool housing; a battery receptacle formed on the tool housing and including a plurality of battery terminals at least partially electrically coupled to the electronic control module, wherein the electronic control module is configured to selectively configure the plurality of battery terminals between a first state in which one or more of the plurality of battery terminals is configured to receive power from a battery pack externally mounted to the battery receptacle and electrically coupled to the plurality of battery terminals, and a second state in which at least a portion of the plurality of battery terminals is configured to receive communication signals from a communication adapter externally mounted to the battery receptacle and electrically coupled to the plurality of battery terminals.
Clause 2: The electric power tool of clause 1, wherein, when the plurality of battery terminals is configured in the first state, the electronic control module is configured to: monitor the at least a portion of the plurality of battery terminals to identify a predetermined combination of signals at the plurality of battery terminals; and in response to identifying the predetermined combination of signals, configure the at least a portion of the plurality of battery terminals to be in the second state.
Clause 3: The electric power tool of clause 1 or 2, further comprising: at least one additional electronic control module; and a bus that connects the electronic control module to the at least one additional electronic control module, wherein, when the plurality of battery terminals is in the second state, the communication signals received from the communication adapter are provided on the bus.
Clause 4: The electric power tool of any of clauses 1-3, wherein, when the plurality of battery terminals is in the second state, the electronic control module is configured to: receive the communication signals via the plurality of battery terminals; and broadcast the communication signals internally on the bus.
Clause 5: The electric power tool of any of clauses 1-4, further comprising: switch circuitry configured to electrically couple the at least a portion of the plurality of battery terminals to the bus in response to receiving an enable signal, wherein the electronic control module is configured to generate the enable signal in response to identifying the predetermined combination of signals at the at least a portion of the plurality of battery terminals.
Clause 6: The electric power tool of any of clauses 1-5, wherein each additional electronic control module of the at least one additional electronic control module is associated with a unique identifier and configured to monitor the communication signals on the bus for the unique identifier to establish a communication connection with the communication adapter via the bus.
Clause 7: The electric power tool of any of clauses 1-6, wherein, in response to establishing the communication connection with the communication adapter, each additional electronic control module of the at least one additional electronic control module is configured to perform at least one of following operations: receive and install a software update via the bus, provide data to the communication adapter via the bus, or any combination thereof.
Clause 8: The electric power tool of any of clauses 1-7, wherein the bus that connects the electronic control module to the at least one additional electronic control module utilizes a controller area network (CAN) protocol.
Clause 9: The electric power tool of any of clauses 1-8, wherein the plurality of battery terminals does not include a dedicated communications terminal.
Clause 10: The electric power tool of any of clauses 1-9, wherein the battery pack is configured to output voltage at a first voltage level to the plurality of battery terminals, and wherein the adapter is configured to output voltage at a second voltage level that is less than the first voltage level to the plurality of battery terminals, and wherein the first voltage level is not compatible with the bus.
Clause 11: A system comprising: an electric power tool including: a tool housing; an electric motor disposed within the tool housing; an electronic control module disposed in the tool housing; and a battery receptacle formed on the tool housing and including a plurality of battery terminals at least partially electrically coupled to the electronic control module, wherein, when a removeable battery pack is coupled to the battery receptacle, one or more of the plurality of battery terminals is configured to receive power from the battery pack, wherein the power is selectively supplied to the electric motor, and when a communication adapter is externally mounted to the battery receptacle, at least a portion of the plurality of battery terminals is configured to receive communication signals from the communication adapter electrically coupled to the plurality of battery terminals, wherein the communication signals are transmitted to the electronic control module or another electronic component of the electric power tool.
Clause 12: The system of clause 11, further comprising: the communication adapter, wherein the communication adapter includes a plurality of electrical contacts configured to be electrically coupled to the plurality of battery terminals of the electric power tool, and wherein the communication adapter is configured to transmit the communication signals via at least a portion of the plurality of electrical contacts electrically coupled to the at least a portion of the plurality of battery terminals.
Clause 13: The system of clause 11 or 12, further comprising: a computing device configured to be electrically coupled to the communication adapter and configured to control the communication adapter to: provide a predetermined combination of signals at the plurality of battery terminals via the plurality of electrical contacts; and transmit the communication signals via the at least a portion of the plurality of electrical contacts electrically coupled to the at least a portion of the plurality of battery terminals.
Clause 14: The system of any of clauses 11-13, wherein the electronic control module is configured to monitor the plurality of battery terminals to identify the predetermined combination of signals at the plurality of battery terminals; and in response to identifying the predetermined combination of signals at the plurality of battery terminals, configure the at least a portion of the plurality of battery terminals to be in a communication state in which the at least a portion of the plurality of battery terminals is configured to receive the communication signals from the communication adapter electrically coupled to the plurality of battery terminals.
Clause 15: The system of any of clauses 11-14, wherein the electric power tool further includes: at least one additional electronic control module; and a bus that connects the electronic control module to the at least one additional electronic control module, wherein, when the plurality of battery terminals is in the communication state, the communication signals received from the communication adapter are provided on the bus.
Clause 16: The system of any of clauses 11-15, wherein, when the plurality of battery terminals is in the communication state, the electronic control module is configured to: receive the communication signals; and broadcast the communication signals internally on the bus.
Clause 17: The system of any of clauses 11-16, wherein the electric power tool further includes switch circuitry configured to electrically couple the at least a portion of the plurality of battery terminals to the bus in response to receiving an enable signal, and wherein the electronic control module is configured to generate the enable signal in response to identifying the predetermined combination of signals at the plurality of battery terminals.
Clause 18: The system of any of clauses 11-17, wherein each additional electronic control module of the at least one additional electronic control module is associated with a unique identifier and configured to monitor the communication signals on the bus for the unique identifier to establish a communication connection with the communication adapter via the bus.
Clause 19: The system of any of clauses 11-18, wherein, in response to establishing the communication connection with the communication adapter, each additional electronic control module of the at least one additional electronic control module is configured to perform at least one of following operations: receive and install a software update from the communication adapter via the bus, provide data to the communication adapter via the bus, or any combination thereof.
Clause 20: The system of any of clauses 11-19, wherein the bus that connects the electronic control module to the at least one additional electronic control module utilizes a controller area network (CAN) protocol.
Clause 21: The system of any of clauses 11-20, wherein the plurality of battery terminals does not include a dedicated communications terminal.
Clause 22: The system of any of clauses 11-21, wherein the battery pack is configured to output voltage at a first voltage level to the plurality of battery terminals, and wherein the adapter is configured to output voltage at a second voltage level that is less than the first voltage level to the plurality of battery terminals, and wherein the first voltage level is not compatible with the bus.

These and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

### BRIEF DESCRIPTION OF THE DRAWINGS

Additional advantages and details are explained in greater detail below with reference to the non-limiting, exemplary embodiments that are illustrated in the accompanying schematic figures, in which:
FIG. 1A depicts a perspective view of a power tool, such as a backpack power equipment, according to some non-limiting embodiments or aspects;
FIGS. 1B and 1C, respectively, depict rear views of power equipment shown in FIG. 1A, in which the power equipment is in a lowered and a raised position, according to some non-limiting embodiments or aspects;
FIG. 2 depicts a block diagram of various components of the backpack power equipment shown in FIGS. 1A-1C, according to some non-limiting embodiments or aspects;
FIG. 3A depicts a perspective view of a battery connector of the power tool to which a battery may be connected, according to some non-limiting embodiments or aspects;
FIG. 3B depicts a circuit diagram of a communication adapter configured to be coupled with the battery connector of FIG. 3A, according to some non-limiting embodiments or aspects;
FIG. 4 depicts a block diagram of a system for selective communication between the communication adapter and the power tool via battery terminals of the battery connector, according to some non-limiting embodiments or aspects;
FIG. 5 depicts a block diagram of another system for selective communication between the communication adapter and the power tool via battery terminals, according to some non-limiting embodiments or aspects; and
FIG. 6 depicts a circuit diagram of switch circuitry employed in the system of FIG. 5, according to some non-limiting embodiments or aspects.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the embodiments as they are oriented in the drawing figures. However, it is to be understood that the embodiments may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting.

It is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments or aspects. Hence, specific dimensions and other physical characteristics related to the embodiments or aspects disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

Some of the techniques described herein may be implemented by one or more computer programs executed by one or more processors residing, for example, on a power tool or power equipment. The computer programs may include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

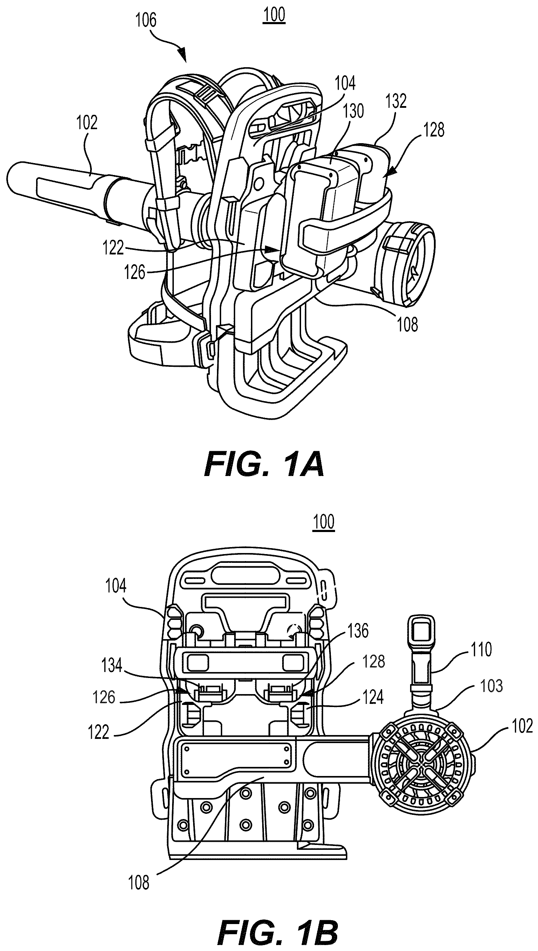

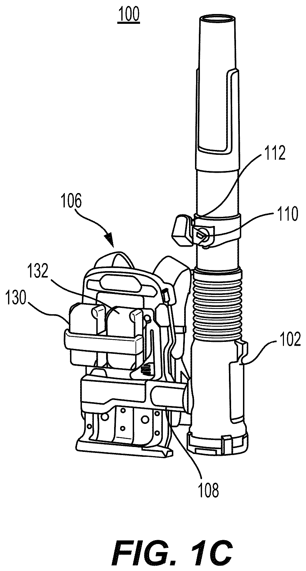

FIG. 1A shows a perspective view of a backpack power equipment 100, according to some non-limiting embodiments or aspects of the present disclosure. FIGS. 1B and 1C, respectively, show rear views of the backpack power equipment 100 shown in FIG. 1A, in which a power equipment 102 is in a lowered and a raised position, according to some non-limiting embodiments or aspects of the present disclosure. It should be understood that the backpack power equipment 100 depicted in FIGS. 1A-1C may include additional components and/or that some of the components described herein may be removed and/or modified without departing from the scope of the backpack power equipment 100 disclosed herein. It should also be understood that the components depicted in FIGS. 1A-1C are located in certain positions for purposes of illustration and should, thus, not be construed as limiting the backpack power equipment 100 solely to what is shown in those figures.

As shown in FIGS. 1A-1C, the backpack power equipment 100 may include a power equipment 102, a base frame 104, and a harness 106. The base frame 104 may be formed of a substantially rigid material, such as a hard plastic, a composite material, a metal, and/or the like. The base frame 104 may include any number of features, such as slots, openings, supports, and/or the like, that enable components of the power equipment 102 to be mounted or strapped to or on the base frame 104. The base frame 104 may further include additional features that enable the backpack power equipment 100 to be carried and used by a user, as discussed herein.

According to examples and as shown in FIGS. 1A-1C, the power equipment 102 is an axial blower. In other examples, the power equipment 102 may be other types of power equipment or tools that may rotatably be mounted to the base frame 104. For example, the power equipment 102 may be a garden tool, such as a string trimmer, an edger, a clipper, a chainsaw, and/or the like.

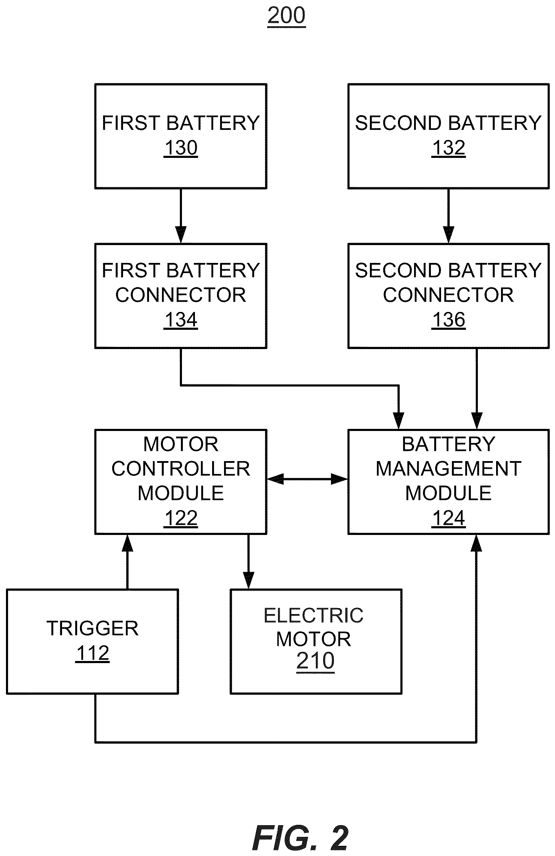

The power equipment 102 may be connected to the base frame 104 through a connecting member 108. The connecting member 108 may rigidly be mounted or otherwise connected to a rear side of the base frame 104 and may include components that enable the power equipment 102 to rotate with respect to the base frame 104. The power equipment 102 may be connected to the base frame 104, such that the power equipment 102 may be rotated vertically with respect to the base frame 104. In other examples, the connecting member 108 may enable the power equipment 102 to move in additional or other manners, such as both horizontally and vertically. In some examples, the power equipment 102 may include a handle 110 that a user may grasp to maneuver the power equipment 102 and a trigger 112 that the user may depress to activate a motor (e.g., electric motor 210 in FIG. 2, etc.) within the power equipment 102. Additional controls and/or indicators may also be provided on the handle, in some examples.

The backpack power equipment 100 may include one or more electronic control modules (e.g., one or more motor controller modules 122, one or more battery management modules 124, etc.). For example, the backpack power equipment 100 may include the motor controller module 122 mounted to the base frame 104 and the battery management module 124 mounted to the base frame 104. In FIG. 1A, the motor controller module 122 and the battery management module 124 are hidden from view. The motor controller module 122 and the battery management module 124 may each be contained within housings (e.g., within tool or equipment housing 103, etc.). As discussed in greater detail herein with respect to FIG. 2, the motor controller module 122 may control operations of an electric motor 210 contained in the power equipment 102, and the battery management module 124 may manage various operations of batteries mounted on the backpack power equipment 100.

The backpack power equipment 100 is depicted as including at least one battery compartment 126, 128 to support at least one battery 130, 132. The batteries 130, 132 are omitted from FIG. 1B. The battery compartments 126, 128 may each include a battery connector 134, 136 (FIG. 1B) to which the respective batteries 130, 132 may be connected. For example, a first battery 130 may be inserted into a first battery compartment 126 by being moved downward and into the first battery compartment 126. Likewise, a second battery 132 may be inserted into a second battery compartment 128 by being moved downward and into the second battery compartment 128. When the first battery 130 is inserted into the first battery compartment 126, a connector (not shown) on the first battery 130 may come into electrical contact with a first battery connector 134. Likewise, when the second battery 132 is inserted into the second battery compartment 132, a connector (not shown) on the second battery 132 may come into electrical contact with a second battery connector 136. As a result, power from the batteries 130, 132 may be provided to the power equipment 102 through the first and second battery connectors 134, 136 and through wiring extending through the connecting member 108.

FIG. 2 shows a block diagram 200 of various components of the backpack power equipment 100, according to some non-limiting embodiments or aspects. For example, the block diagram 200 shown in FIG. 2 may represent a wiring diagram of the various components of the backpack power equipment 100. It should be understood that the block diagram 200 depicted in FIG. 2 may include additional components and/or that some of the components, described herein, may be removed and/or modified without departing from the scope of the block diagram 200, as disclosed herein. It should also be understood that the components depicted in FIG. 2 are for purposes of illustration and should, thus, not be construed as limiting the backpack power equipment 100 to the components and arrangements shown therein.

As shown in FIG. 2, the first battery 130 may be connected to the first battery connector 134 and the second battery 132 may be connected to the second battery connector 136. The first battery connector 134 and the second battery connector 136 may be connected to the battery management module 124. The trigger 112 may also be connected to the motor controller module 122 and the battery management module 124. The motor controller module 122 may be connected to the battery management module 124 and the electric motor 210 of the power equipment 102. For example, a user may depress the trigger 112, which may cause a signal to be sent to the motor controller module 122 to output power to the electric motor 210. The motor controller module 122 may vary the amount of power outputted to the electric motor 210 based on the amount of pressure being applied to the trigger 112. The electric motor 210 (e.g., a high-power electric motor, etc.) may be disposed in tool or equipment housing 103 (e.g., in a motor housing portion, etc.). Electric motor 210 may include a brushed DC motor, a brushless DC motor, such as an electric brushless direct-current (BLDC) drive motor, and/or the like.

The motor controller module 122 may include circuitry (or equivalently, electronics, logic blocks, etc.) to convert energy stored in the first and second batteries 130, 132 into motion of the electric motor 210. For example, the motor controller module 122 may ensure that the electric motor 210 receives the correct amount of power corresponding to the trigger 112 movement. The motor controller module 122 may also regulate the speed and acceleration of the electric motor 210 based on the trigger 112 input.

The battery management module 124 may include circuitry (or equivalently, electronics, logic blocks, etc.) to oversee and manage the first and second batteries 130, 132. For example, the battery management module 124 may safeguard the cells in the first and second batteries 130, 132 from damage due to overcharging or over-discharging. The battery management module 124 may also ensure that the first and second batteries 130, 132 operate within their safe operating ranges. The battery management module 124 may further continuously monitor various battery parameters, such as voltage, temperature, inflow or outflow of current, and/or the like. In some implementations, the battery management module 124 may perform calculations based on the monitored data, such as estimating remaining charge, assessing operational state, optimizing battery performance, and/or the like.

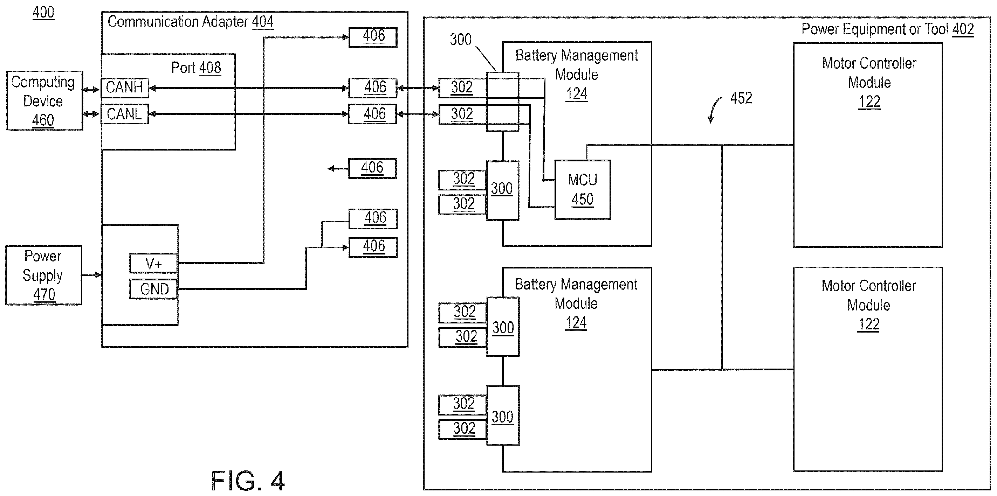

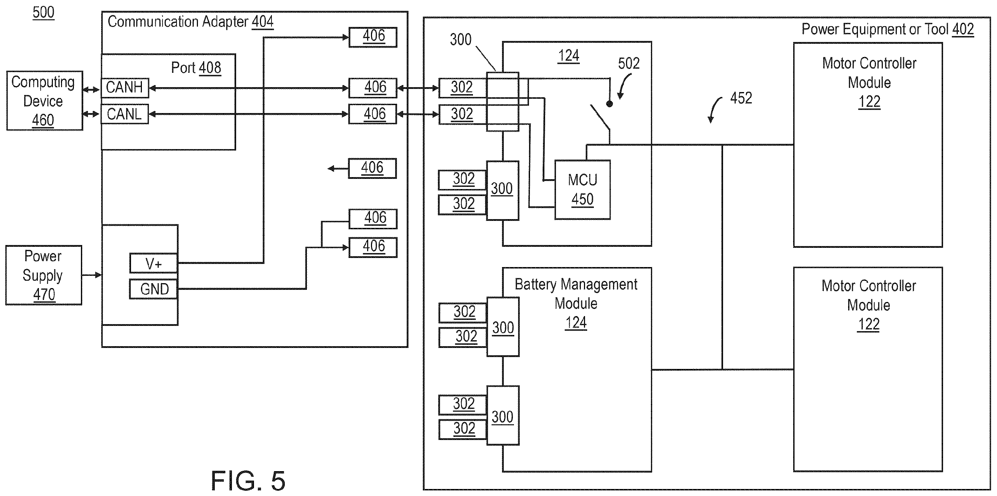

Although the block diagram 200 of FIG. 2 depicts the backpack power equipment 100 as including a single motor controller module 122 and a single battery management module 124, some non-limiting embodiments or aspects of the backpack power equipment 100 may include multiple motor controller modules 122 and/or multiple battery management modules 124, which may be interconnected via a bus, as described herein in more detail, with respect to FIGS. 4 and 5.

It is noted herein that while some non-limiting embodiments or aspects of the present disclosure are described with reference to the backpack power equipment 100, some non-limiting embodiments or aspects of the present disclosure can be used with any system, including one or more electronic control modules for controlling a supply of electric power from a battery pack to a power consuming component, such as any cordless (battery operated) device and, particularly, in any cordless (battery operated) power tool/device. For example, some non-limiting embodiments or aspects of the present disclosure, discussed herein, may be used with one or more electronic control modules in an impact driver, torque wrench, grinder, saw, sander, tapper, nailer, powered cart and wheel barrow, lawn mower, lawn and garden tractor, lawn trimmer, lawn edger, lawn and leaf blower or sweeper, hedge trimmer, pruner, lopper, chainsaw, rake, pole saw, tiller, cultivator, aerator, log splitter, post hole digger, trencher, stump grinder, snow thrower (or any other snow or ice cleaning or clearing implement), lawn, wood and leaf shredder and chipper, lawn and/or leaf vacuum, pressure washer, lawn equipment, garden equipment, driveway sprayer and spreader, sports field marking equipment, or any other power tool or power consuming equipment.

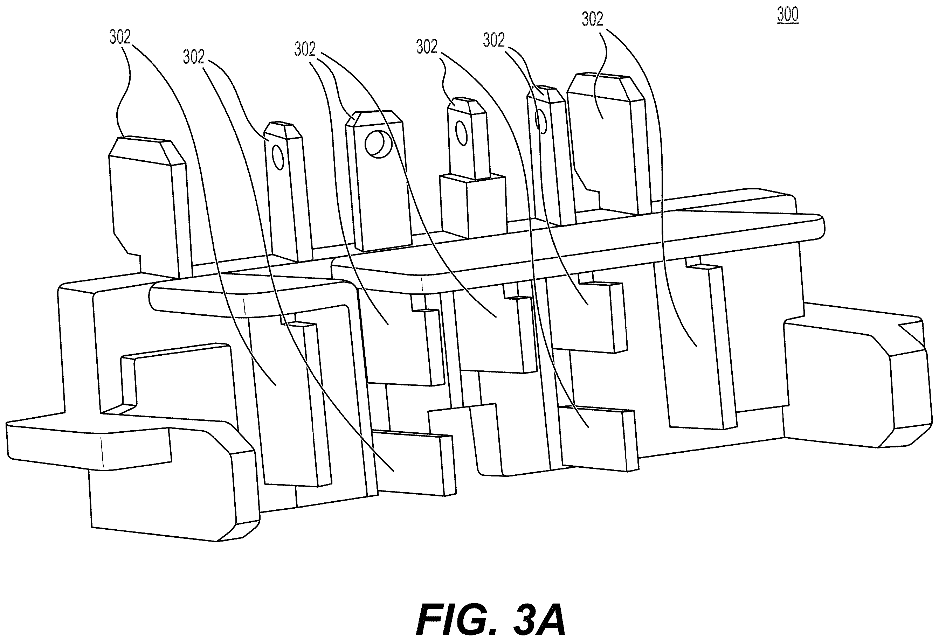

FIG. 3A depicts a perspective view of battery connector 300 (e.g., battery connector 134, battery connector 136, a battery receptacle, etc.) of the backpack power equipment 100 or other cordless power tools or equipment to which a battery pack (e.g., battery 130, battery 132, etc.) may be connected, according to some non-limiting embodiments or aspects. The battery pack, according to some non-limiting embodiments or aspects, may be a removeable power tool battery pack, including lithium-based battery cells, that deliver power via a set of B+ and B-terminals. An example of such a battery pack may be a commercially available DeWalt^{®} Flexvolt MAX DCB606 battery pack having a maximum voltage of approximately 60 volts. A detailed description of such a battery pack may be found in, e.g., US Patent No. 9,583,745, which is incorporated herein by reference in its entirety. It should be noted that other types of battery packs, including those having nominal and/or maximum voltages that are less than 60 volts (e.g., 12 volts, 20 volts, 28 volts, 36 volts, 40 volts, etc.) or having nominal and/or maximum voltages that are greater than 60 volts (e.g., 72 volts, 80 volts, etc.) are within the scope of this disclosure. It should be understood that the battery connector 300 may include additional components and/or that some of the components, described herein, may be removed and/or modified without departing from the scope of the battery connector 300, as described herein. It should also be understood that the components depicted in FIG. 3A are for purposes of illustration and should, thus, not be construed as limiting the battery connector 300 to the components and arrangements shown therein.

As shown in FIG. 3A, the battery connector 300 may include a plurality of battery terminals 302. The plurality of battery terminals 302 may be electrically coupled to an electronic control module (e.g., to a battery management module 124, etc.). The plurality of battery terminals 302 may include a battery positive terminal B+, a battery negative terminal B-, an identification terminal ID, a thermistor terminal TH, a first stack voltage terminal S1, a second stack voltage terminal S2, and/or the like. The battery positive terminal B+ and the battery negative terminal B-may be configured for receiving electric power from the battery pack (not shown). The identification terminal ID may be configured for battery pack identification and/or battery capacity identification. The thermistor terminal TH may be configured for thermal monitoring with a thermistor located within the battery pack. In some examples, the thermistor may be wired between the battery positive terminal B+ and the thermistor terminal TH. The first stack voltage terminal S1 and/or the second stack voltage terminal S2 may be configured to sense voltage of subparts of arrays of battery cells within the battery pack. In some examples, in which the battery pack has a maximum voltage of 60 volts and/or a nominal voltage of 54 volts, the first and second stack voltage terminals S1 and S3 may be tapped into the array of cells at different points (e.g., at 16 volts and 40 volts, respectively). This information may be used to monitor individual battery cell voltages during charge and discharge of the battery pack. Further, a battery charger may use this information for cell balancing.

The plurality of battery terminals 302 of the battery connector 300 may not include a dedicated communications terminal. For example, the plurality of battery terminals 302 of the battery connector 300 may not be configured for dedicated data communications between an electronic control module (e.g., a battery management module 124, etc.) to which the plurality of battery terminals 302 is electrically coupled and another device that is electrically coupled to the plurality of battery terminals 302.

FIGS. 4 and 5 depict block diagrams of systems 400 and 500 for selective communication between a communication adapter and the backpack power equipment 100 (or other cordless power tools or equipment) via battery terminals of the battery connector 300, according to some non-limiting embodiments or aspects. As shown in FIGS. 4 and 5, systems 400 and 500 may include power equipment or tool 402 (e.g., the backpack power equipment 100, etc.) and/or communication adapter 404. It should be understood that the power equipment or tool 402 and/or the communication adapter 404 may include additional components and/or that some of the components, described herein, may be removed and/or modified without departing from the scope of the power equipment or tool 402 and/or the communication adapter 404, described herein. It should also be understood that the components depicted in FIGS. 4 and 5 are for purposes of illustration and should, thus, not be construed as limiting the systems 400 and 500 to the components and arrangements shown therein.

The power equipment or tool 402 may include a plurality of electronic control modules. For example, the power equipment or tool 402 may include a plurality of battery management modules 124 and/or a plurality of motor controller modules 122. Each battery management module 124 may be electrically coupled to a plurality of battery terminals 302 of a plurality of battery connectors 300. However, some non-limiting embodiments or aspects of the power equipment or tool 402 are not limited thereto, and the power equipment or tool 402 may include a single battery management module 124 and/or a single motor controller module 122, and/or a battery management module 124 may be electrically coupled to a plurality of battery terminals 302 of a single battery connector 300.

A battery management module 124 may include a control circuitry or a controller 450 (e.g., a microcontroller, etc.) configured to selectively configure a plurality of battery terminals 302 of a battery connector 300 that is electrically coupled to that battery management module 124 between a first state in which the plurality of battery terminals 302 is configured to receive power from a battery pack (e.g., the first battery 130, the second battery 132, etc.) electrically coupled to the plurality of battery terminals 302 and a second state in which at least a portion of the plurality of battery terminals 302 is configured to receive communication signals from the communication adapter 404 electrically coupled to the plurality of battery terminals 302 of the battery connector 300 that is electrically coupled to that battery management module 124.

The communication adapter 404 may include a plurality of electrical contacts 406 configured to be electrically coupled to the plurality of battery terminals 302 of a battery connector 300 of power equipment or tool 402. The communication adapter 404 may be configured to transmit the communication signals via at least a portion of the plurality of electrical contacts 406 electrically coupled to the at least a portion of the plurality of battery terminals 302 that may be configured to receive the communication signals.

The communication adapter 404 may be sized and shaped in a same or similar manner as a battery pack (e.g., as the first battery 130, as the second battery 132, etc.). In some examples, the communication adapter 404 may include battery railings, a latching mechanism, and/or a terminal block similar to a removeable power tool battery pack. For example, the communication adapter 404 may be inserted into the first battery compartment 126 of the backpack power equipment 100 by being moved downward and into the first battery compartment 126 or into the second battery compartment 128 of the backpack power equipment 100 by being moved downward and into the second battery compartment 128. When the communication adapter 404 is inserted into the first battery compartment 126 or the second battery compartment 128, the plurality of electrical contacts 406 may come into electrical contact with a plurality of battery terminals 302 of a battery connector 300 (e.g., of battery connector 134, of battery connector 136, etc.).

The communication adapter 404 may include a port 408 (e.g., a Universal Serial Bus (USB) port, etc.) configured to connect the computing device 460 to the at least a portion of the plurality of the electrical contacts 406 of the communication adapter 404 that are electrically coupled to the at least a portion of the plurality of battery terminals 302 that may be configured to receive the communication signals. For example, the computing device 460 may be configured to be electrically coupled to the communication adapter 404 (e.g., via the port 408, etc.).

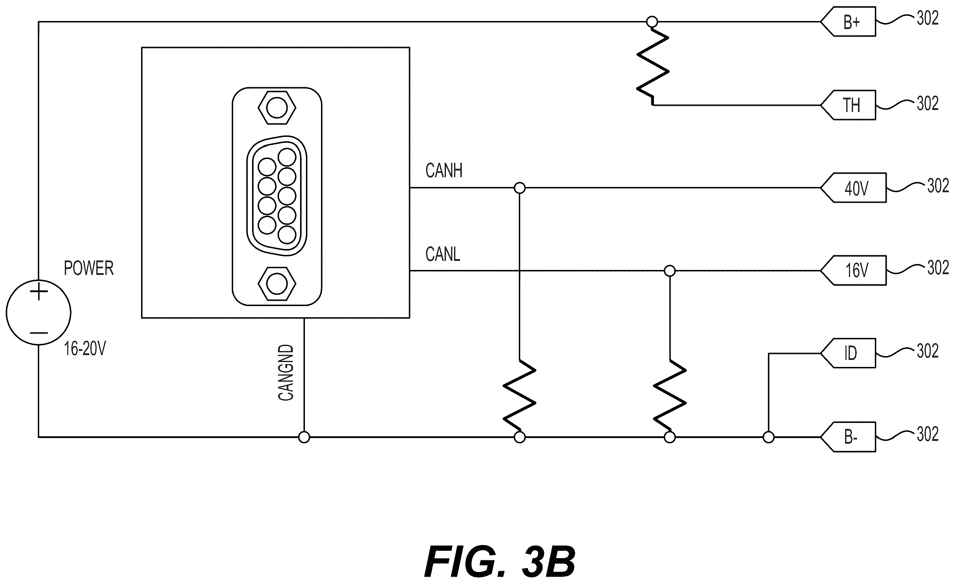

In some implementations, the computing device 460 may be connected to the port 408 of the communication adapter 404 via a controller area network (CAN) to USB adapter. For example, and referring also to FIG. 3B, the communication adapter 404 may electrically couple the battery positive terminal B+ and the battery negative terminal B- of the battery connector 300 to a power supply (e.g., a 16-20V power supply, a lower voltage power supply than a battery pack, etc.) to power the plurality of electronic control modules, including the plurality of battery management modules 124 and/or the plurality of motor controller modules 122. As an example, the communication adapter 404 may receive a supply of power from a power supply 470 (e.g., a charging device connected to an electrical mains, etc.) and provide the supply of power to the power equipment or tool 402 (e.g., via the battery positive terminal B+ and the battery negative terminal B-) to power the plurality of electronic control modules including the plurality of battery management modules 124 and/or the plurality of motor controller modules 122.

The communication adapter 404 may electrically couple one or more of the thermistor terminal, the first stack voltage terminal S1 and/or the second stack voltage terminal S2 of the battery connector 300 to the computing device 460 (e.g., via a pair of electrical contacts of the plurality of electrical contacts 406 and/or the CAN to USB adapter, etc.) to enable transmission of the communication signals (e.g., a high communication signal CANH, a low communication signal CANL, etc.) to the first stack voltage terminal S1 and the second stack voltage terminal S2. For example, the control circuitry or the controller 450 of a battery management module 124 may configure the first stack voltage terminal S1 and the second stack voltage terminal S2 as at least a portion of the plurality of battery terminals 302 that is configured to receive the communication signals from the communication adapter 404 electrically coupled to the plurality of battery terminals 302 of the battery connector 300 that is electrically coupled to that battery management module 124. In some implementations, other electrical contacts of the plurality of electrical contacts 406 of the communication adapter 404 may be electrically coupled to the identification terminal ID, the thermistor terminal TH, and/or other battery terminals of the plurality of battery terminals 302.

The computing device 460 may be configured to control the communication adapter 404 to provide a predetermined combination of signals at the plurality of battery terminals 302 via the plurality of electrical contacts 406, and the computing device 460 may be configured to transmit the communication signals via the at least a portion of the plurality of electrical contacts 406 electrically coupled to the at least a portion of the plurality of battery terminals 302 of the battery connector 300 (e.g., via the first stack voltage terminal S1 and the second stack voltage terminal S2, etc.).

When a plurality of battery terminals 302 of a battery connector 300 is configured in the first state, in which the plurality of battery terminals 302 is configured to receive power from the battery pack electrically coupled to the plurality of battery terminals 302, a battery management module 124 (e.g., the control circuitry or the controller 450, etc.) may be configured to monitor the plurality of battery terminals 302 to identify the predetermined combination of signals at the plurality of battery terminals 302. In response to identifying the predetermined combination of signals at the plurality of battery terminals 302, the battery management module 124 (e.g., control circuitry or controller 450, etc.) may be configured to configure the at least a portion of the plurality of battery terminals 302 (e.g., the first stack voltage terminal S1 and the second stack voltage terminal S2, etc.) to be in the second state in which the at least a portion of the plurality of battery terminals 302 is configured to receive the communication signals from the communication adapter 404 that is electrically coupled to the plurality of battery terminals 302. For example, the battery management module 124 (e.g., the control circuitry or the controller 450, etc.) may identify the predetermined combination of signals as coming from the communication adapter 404 and enable data communication with the communication adapter 404 via the at least a portion of the plurality of battery terminals 302.

The predetermined combination of signals may include a unique and/or out-of-range (e.g., a signal not obtainable when a battery pack is connected to the plurality of battery terminals 302 of a battery connector 300, etc.) combination of signals provided at the plurality of battery terminals 302 of a battery connector 300 (e.g., the B+, B-, Id, Thermistor, and Stack voltage terminals, etc.). The predetermined combination of signals may alert the battery management controller 124 electrically coupled to the plurality of battery terminals 302 of that battery connector 300 that the communication adapter 404 is coupled to the plurality of battery terminals 302.

The power equipment or tool 402 may include a bus 452 that connects the plurality of electronic control modules, including the plurality of battery management modules 124 and/or the plurality of motor controller modules 122 of the power equipment or tool 402. The bus 452 may utilize the CAN protocol. For example, the plurality of electronic control modules may be configured to communicate via the bus 452 using the CAN protocol.

When the plurality of battery terminals 302 is in the second state, the communication signals received from the communication adapter 404 may be provided on the bus 452. For example, the battery management module 124 may be configured to provide the communication signals received from the communication adapter 404 on the bus 452 when the plurality of battery terminals 302 is in the second state.

In some non-limiting embodiments or aspects, and referring specifically to FIG. 4, when the plurality of battery terminals 302 is in the second state, the battery management module 124 (e.g., the control circuitry or the controller 450, etc.) may be configured to receive the communication signals via the at least a portion of the plurality of battery terminals 302 and broadcast the communication signals on the bus 452. For example, the battery management module 124 (e.g., the control circuitry or the controller 450, etc.) may electrically isolate the plurality of battery terminals 302 from the bus 452, and the battery management module 124 (e.g., the control circuitry or the controller 450, etc.) may be configured to receive the communication signals via the at least a portion of the plurality of battery terminals 302 (e.g., via the first stack voltage terminal S1 and the second stack voltage terminal S2, etc.) and generate, based on the communication signals received via the at least a portion of the plurality of battery terminals 302, corresponding communication signals on the bus 452.

In some non-limiting embodiments or aspects, and referring specifically to FIG. 5, the power equipment or tool 402 (e.g., a battery management module 124 of the power equipment or tool 402, etc.) may include a switch circuitry 502 configured to electrically couple the at least a portion of the plurality of battery terminals 302 that may be configured to receive the communication signals to the bus 452 in response to receiving an enable signal. The battery management module 124 (e.g., the control circuitry or the controller 450, etc.) may be configured to generate the enable signal in response to identifying the predetermined combination of signals at the plurality of battery terminals 302. For example, when the plurality of battery terminals 302 of the battery connector 300 is configured in the first state in which the plurality of battery terminals 302 is configured to receive power from the battery pack electrically coupled to the plurality of battery terminals 302, the switch circuitry 502 may be "open" and the at least a portion of the plurality of battery terminals 302 may be disconnected or decoupled from the bus 452, and when the plurality of battery terminals 302 is in the second state in which the at least a portion of the plurality of battery terminals 302 (e.g., the first stack voltage terminal S1 and the second stack voltage terminal S2, etc.).is configured to receive the communication signals, the switch circuitry 502 may be "closed" and the at least a portion of the plurality of battery terminals 302 may be connected or coupled to the bus 452. In this way, the bus 452 may be selectively coupled to the at least a portion of the plurality of battery terminals 302 only when the enable signal is generated by the control circuitry or the controller 450 of the battery management module 124 that is electrically coupled to the plurality of battery terminals 302.

It should be noted that the bus 452 should not be connected to the plurality of battery terminals 302 of a battery connector 300 when a battery pack (e.g., the first battery 130, the second battery 132, etc.) is electrically coupled to the plurality of battery terminals 302 of the battery connector 300. The bus 452 and/or the electronic control modules, connected thereto, may be configured to operate at a relatively low voltage (e.g., 3.3V, 5V, etc.) and can be damaged by the higher voltage level (e.g., 40V, 60V, etc.) of the battery pack. For example, a battery pack (e.g., the first battery 130, the second battery 132, etc.) may be configured to output voltage at a first voltage level to the plurality of battery terminals 302, and the communication adapter 404 may be configured to output voltage at a second voltage level that is less than the first voltage level to the plurality of battery terminals. The first voltage level may not be compatible with the bus 452 and/or the electronic control modules connected thereto.

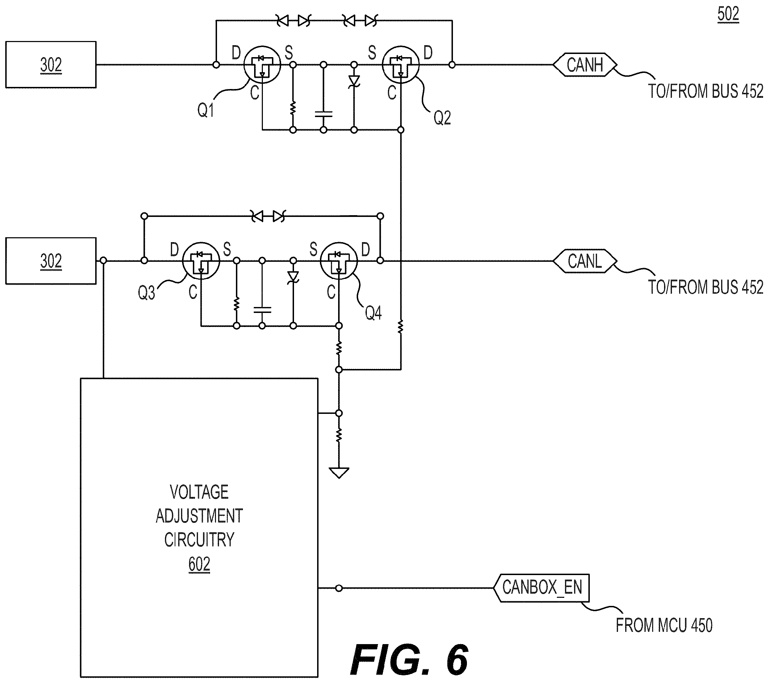

FIG. 6 depicts a circuit diagram of the switch circuitry 502 of the system 500 of FIG. 5, according to some non-limiting embodiments or aspects. As shown in FIG. 6, the switch circuitry 502 may include a first pair of back-to-back MOSFETS Q1 and Q2, a second pair of back-to-back MOSFETS Q3 and Q4, and/or a voltage adjustment circuitry 602. The first pair of back-to-back MOSFETS Q1 and Q2 may be configured to electrically couple a first battery terminal of the at least a portion of the plurality of battery terminals 302 (e.g., the first stack voltage terminal S1, a high communication signal CANH, etc.) that may be configured to receive the communication signals to the bus 452 in response to the enable signal from the control circuitry or the controller 450. The second pair of back-to-back MOSFETS Q3 and Q4 may be configured to electrically couple a second battery terminal of the at least a portion of the plurality of battery terminals 302 (e.g., the second stack voltage terminal S2, a low communication signal CANH, etc.) that may be configured to receive the communication signals to the bus 452 in response to the enable signal from the control circuitry or the controller 450. The voltage adjustment circuitry 602 may be configured to adjust a voltage level of the enable signal (e.g., from 3.3V to 10V, etc.) before providing the enable signal to drive the first pair of back-to-back MOSFETS Q1 and Q2 and the second pair of back-to-back MOSFETS Q3 and Q4.

The first pair of back-to-back MOSFETS Q1 and Q2 and the second pair of back-to-back MOSFETS Q3 and Q4 may enable blocking a current flowing in both directions between the bus 452 and the at least a portion of the plurality of battery terminals 302 may be configured to receive the communication signals, such that the bus 452 may be fully disconnected in both directions when a battery pack is electrically coupled to the plurality of battery terminals 302.

Each electronic control module of the plurality of electronic control modules, including the plurality of battery management modules 124 and the plurality of motor controller modules 122, may be associated with a unique identifier and configured to monitor the communication signals on the bus 452 for the unique identifier to establish a communication connection with the communication adapter 404 (and the computing device 460) via the bus 452. For example, the bus 452 may utilize a CAN protocol. The communication connection between the communication adapter and a designated electronic control module may be made via a handshaking protocol. For example, when a designated electronic control module observes a signal, including its unique identifier on the bus 452, it may transmit an acknowledgement signal on the bus 452, and the adapter may respond with an acknowledgement signal that completes the handshake and establishes the connection. The communication adapter 404, in this manner, is able to establish a communication link with the backpack power equipment 100 via the battery terminals of the battery connector 300. This communication link may be used to retrieve data from one or more control modules of the backpack power equipment 100, set operating parameters or modes of operation of one or more control modules, push software updates, etc. In response to establishing the communication connection with communication adapter 404, each electronic control module may be configured to perform at least one of following operations: receive and install a software update via the bus, provide data to the communication adapter via the bus, or any combination thereof. In this way, the computing device 460 may establish a communication connection through the communication adapter 404, the at least a portion of the plurality of battery terminals 302 of the battery connector 300, and the bus 452 to an electronic control module designated by the unique identifier in order to program software updates for the electronic control module, retrieve data form the electronic control module (e.g., performance or usage metrics, voltage measurements, current measurements, etc.), and/or the like. As an example, to program a motor controller module 122, the computing device 460 may stream a boatload command on the bus 452 that address the unique ID of that motor controller module 122 on the bus 452, receive an acknowledgement from the motor controller module 122 via the bus 452, and then begin to stream the programming update to the motor controller module 122 on the bus 452.

Although embodiments have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect.

## Claims

1. An electric power tool comprising:
a tool housing;
an electronic control module disposed in the tool housing;
a battery receptacle formed on the tool housing and including a plurality of battery terminals at least partially electrically coupled to the electronic control module,
wherein the electronic control module is configured to selectively configure the plurality of battery terminals between a first state, in which one or more of the plurality of battery terminals is configured to receive power from a battery pack externally mounted to the battery receptacle and electrically coupled to the plurality of battery terminals, and a second state, in which at least a portion of the plurality of battery terminals is configured to receive communication signals from a communication adapter externally mounted to the battery receptacle and electrically coupled to the plurality of battery terminals.

2. The electric power tool of claim 1, wherein, when the plurality of battery terminals is configured in the first state, the electronic control module is configured to:
monitor the at least a portion of the plurality of battery terminals to identify a predetermined combination of signals at the plurality of battery terminals; and
in response to identifying the predetermined combination of signals, configure the at least a portion of the plurality of battery terminals to be in the second state.

3. The electric power tool of claim 2, further comprising:
at least one additional electronic control module; and
a bus that connects the electronic control module to the at least one additional electronic control module,
wherein, when the plurality of battery terminals is in the second state, the communication signals received from the communication adapter are provided on the bus.

4. The electric power tool of claim 3, wherein, when the plurality of battery terminals is in the second state, the electronic control module is configured to:
receive the communication signals via the plurality of battery terminals; and
broadcast the communication signals internally on the bus.

5. The electric power tool of claim 3 or 4, further comprising:
switch circuitry configured to electrically couple the at least a portion of the plurality of battery terminals to the bus in response to receiving an enable signal,
wherein the electronic control module is configured to generate the enable signal in response to identifying the predetermined combination of signals at the at least a portion of the plurality of battery terminals.

6. A system comprising:
an electric power tool including:
a tool housing;
an electric motor disposed within the tool housing;
an electronic control module disposed in the tool housing; and
a battery receptacle formed on the tool housing and including a plurality of battery terminals at least partially electrically coupled to the electronic control module,
wherein, when a removeable battery pack is coupled to the battery receptacle, one or more of the plurality of battery terminals is configured to receive power from the battery pack, and wherein the power is selectively supplied to the electric motor, and
when a communication adapter is externally mounted to the battery receptacle, at least a portion of the plurality of battery terminals is configured to receive communication signals from the communication adapter electrically coupled to the plurality of battery terminals, wherein the communication signals are transmitted to the electronic control module or another electronic component of the electric power tool.

7. The system of claim 6, further comprising:
the communication adapter, wherein the communication adapter includes a plurality of electrical contacts configured to be electrically coupled to the plurality of battery terminals of the electric power tool, and wherein the communication adapter is configured to transmit the communication signals via at least a portion of the plurality of electrical contacts electrically coupled to the at least a portion of the plurality of battery terminals.

8. The system of claim 7, further comprising:
a computing device configured to be electrically coupled to the communication adapter and configured to control the communication adapter to:
provide a predetermined combination of signals at the plurality of battery terminals via the plurality of electrical contacts; and
transmit the communication signals via the at least a portion of the plurality of electrical contacts electrically coupled to the at least a portion of the plurality of battery terminals.

9. The system of any of claims 6 to 8, wherein the electronic control module is configured to monitor the plurality of battery terminals to identify the predetermined combination of signals at the plurality of battery terminals; and
in response to identifying the predetermined combination of signals at the plurality of battery terminals, configure the at least a portion of the plurality of battery terminals to be in a communication state in which the at least a portion of the plurality of battery terminals is configured to receive the communication signals from the communication adapter electrically coupled to the plurality of battery terminals.

10. The system of any of claims 6 to 9, wherein the electric power tool further includes:
at least one additional electronic control module; and
a bus that connects the electronic control module to the at least one additional electronic control module,
wherein, when the plurality of battery terminals is in the communication state, the communication signals received from the communication adapter are provided on the bus.

11. The system of any of claims 6 to 10, wherein, when the plurality of battery terminals is in the communication state, the electronic control module is configured to:
receive the communication signals; and
broadcast the communication signals internally on the bus.

12. The system of any of claims 6 to 11, wherein the electric power tool further includes switch circuitry configured to electrically couple the at least a portion of the plurality of battery terminals to the bus in response to receiving an enable signal, and
wherein the electronic control module is configured to generate the enable signal in response to identifying the predetermined combination of signals at the plurality of battery terminals.

13. The system of any of claims 10 to 12 or the electric power tool of claim 3, 4 or 5, wherein each additional electronic control module of the at least one additional electronic control module is associated with a unique identifier and configured to monitor the communication signals on the bus for the unique identifier to establish a communication connection with the communication adapter via the bus.

14. The system or the electric power tool of claim 13, wherein, in response to establishing the communication connection with the communication adapter, each additional electronic control module of the at least one additional electronic control module is configured to perform at least one of following operations: receive and install a software update from the communication adapter via the bus, provide data to the communication adapter via the bus, or any combination thereof.

15. The electric power tool of any of claims 1 to 5 or the system of any of claims 6 to 14, wherein:
the bus that connects the electronic control module to the at least one additional electronic control module utilizes a controller area network (CAN) protocol; and/or
the plurality of battery terminals does not include a dedicated communications terminal.

16. The system of any of claims 10 to 15 or the electric power tool of any of claims 3 to 5, wherein the battery pack is configured to output voltage at a first voltage level to the plurality of battery terminals, and wherein the adapter is configured to output voltage at a second voltage level that is less than the first voltage level to the plurality of battery terminals, and wherein the first voltage level is not compatible with the bus.
